# EUROPEAN PATENT SPECIFICATION

(11) **EP 3 320 598 B1**
(45) Date of publication and mention of the grant of the patent: **25.11.2020**
(21) Application number: 16821999.6
(22) Date of filing: 07.07.2016
(51) Int. Cl.: G08C 17/02, H02J 13/00, H04Q 9/00

(54) **WIRELESS CONTROL DEVICE AND METHODS THEREOF**
DRAHTLOSSTEUERUNGSVORRICHTUNGEN UND VERFAHREN DAFÜR
DISPOSITIF DE COMMANDE SANS FIL ET PROCÉDÉS CORRESPONDANTS

(30) Priority: 07.07.2015 US 201562189637 P; 04.01.2016 US 201662274759 P; 04.01.2016 US 201629550417
(43) Date of publication of application: 16.05.2018
(73) Proprietor: Ilumi Solutions, Inc., Dallas, TX 75252 (US)
(72) Inventor: BORA, Swapnil, Dallas, TX 75252 (US); EGAN, Corey, Austin, TX 78731 (US); TANG, Qinghui, Plano, TX 75025 (US)
(74) Representative: Barker Brettell LLP
(86) International application number: PCT/US2016/041388
(87) International publication number: WO 2017/007963

(56) References cited:
- US-A- 6 069 465
- US-A1- 2007 075 965
- US-A1- 2011 179 853
- US-A1- 2012 155 317
- US-A1- 2013 247 117
- US-A1- 2013 315 038
- US-A1- 2014 021 385
- US-A1- 2014 062 297
- US-A1- 2014 169 795
- US-A1- 2014 206 297
- US-A1- 2014 340 630
- US-A1- 2015 116 811

## Description

### FIELD OF THE INVENTION

The present invention relates generally to the field of electronics and, more particularly, to a wireless control device and methods thereof.

### BACKGROUND OF THE INVENTION

US 2007/075965 discloses devices which include one or more sensors for providing data relating to user activity and at least one processor for causing the device to respond based on the user activity which was determined, at least in part, through the sensors. The response by the device includes a change of state of the device, and the response may be automatically performed after the user activity is determined.

US 2015/116811 discloses software applications used for controlling the optical state of one or more optically switchable windows or other optical products installed in a structure such as a building. The applications permit users to send and/or receive data and/or commands for controlling the switchable optical products. In some embodiments, the applications provide an interface with a window network controller, which directly or indirectly controls windows in a structure. Relevant processing involving the application includes user authentication, commissioning, adaptive control, and decisions on whether to permit an action or change requested by a user. In some embodiments, the application allows users to directly control the tint state of one or more tintable windows. In some embodiments, the application allows users to change a rule or property associated with controlling a switchable optical product.

US 2013/315038 discloses techniques for acoustic management of entertainment devices and systems. Various embodiments include techniques for acoustically determining a location of a remote control or other entertainment device. Some embodiments include techniques for controlling one or more entertainment components using voice commands or other acoustic information. Other embodiments include techniques for establishing a voice connection using a remote control device.

US 6069465 discloses a control system for light regulating devices such as blinds or shades. The control system comprises a control unit for connecting to a motor drive of a light regulating device. The control unit comprises a first input for receiving motor control data along a data supply line. A second input is provided for receiving decentralized user commands for altering the position of the light regulating device. The control system is characterized in that the control unit, by means of an external command input can be set into either a slave mode in which data can only be received or into a master mode in which data can be received and transmitted along the data supply line. Hereby any light regulating device can be selected as a master device for controlling the blinds in the same group. The command input of the control unit comprises a manually operatable switch such as a dip switch.

US 2014/062297 discloses a lighting device, which includes a AC/DC or DC/DC power converter, a controller/processor electrically connected to the AC/DC or DC/DC power converter, a light emitting diode (LED) current control circuit communicably coupled to the controller/processor and electrically connected to the AC/DC or DC/DC power converter, and one or more LEDs electrically connected to the LED current control circuit.

### SUMMARY OF THE INVENTION

The present invention provides a wireless control device that includes a power source, one or more sensors, one or more switches, a wireless transceiver circuit, an antenna connected to the wireless transceiver circuit, and a processor communicably coupled to the power source, the one or more sensors, the one or more switches, and the wireless transceiver circuit. The processor receives a data from the one or more sensors or the one or more switches, determines a pre-defined action associated with the data that identifies one or more external devices and one or more tasks, and transmits one or more control signals via the wireless transceiver circuit and the antenna that instruct the identified external device(s) to perform the identified task(s).

In addition, the present invention provides a wireless control device that includes a housing having a base plate, an outer ring attached to the base plate, an electronic board disposed within the outer ring and attached to the base plate, and a top cover disposed over the outer ring and attached to the base plate. A power source is disposed on the electronic board. One or more sensors are disposed on or proximate to the electronic board. One or more switches are disposed on or proximate to the electronic board. A wireless transceiver circuit is disposed on the electronic board. An antenna is connected to the wireless transceiver circuit. A processor is disposed on the electronic board and communicably coupled to the power source, the one or more sensors, the one or more switches, and the wireless transceiver circuit. The processor receives a data from the one or more sensors or the one or more switches, determines a pre-defined action associated with the data that identifies one or more external devices and one or more tasks, and transmits one or more control signals via the wireless transceiver circuit and the antenna that instruct the identified external device(s) to perform the identified task(s)wherein the power source, the one or more sensors, the one or more switches, the wireless transceiver circuit, the antenna and the processor are attached to the electronic board.

Moreover, the present invention provides a method for controlling one or more external devices by providing a wireless control device that includes a housing, a power source disposed in the housing, one or more sensors disposed on or within the housing, one or more switches disposed on or within the housing, a wireless transceiver circuit disposed within the housing, an antenna disposed on or within the housing and connected to the wireless transceiver circuit, a processor disposed within the housing and communicably coupled to the power source, the one or more sensors, the one or more switches, and the wireless transceiver circuit. A data is received from the one or more sensors or the one or more switches. A pre-defined action associated with the data is determined that identifies the one or more external devices and one or more tasks using the processor. One or more control signals are transmitted via the wireless transceiver circuit and the antenna that instruct the identified external device(s) to perform the identified task(s).

These and other objects, advantages and features of this invention will be apparent from the following description taken with reference to the accompanying drawing, wherein is shown a preferred embodiment of the invention.

### BRIEF DESCRIPTION OF THE DRAWINGS

The above and further advantages of the invention may be better understood by referring to the following description in conjunction with the accompanying drawings, in which:
FIGURE 1 is a block diagram of a wireless control device in accordance with one embodiment of the present invention;
FIGURE 2A is a diagram of a user interface screen for configuring one or more switches of the wireless control device in accordance with one embodiment of the present invention;
FIGURE 2B is a diagram of a user interface screen showing a configuration example for the one or more switches in accordance with one embodiment of the present invention;
FIGURE 3A is a diagram of a user interface screen for defining an action for the one or more switches in accordance with one embodiment of the present invention;
FIGURES 3B-3C are diagrams of a user interface screen showing examples of action definitions for the one or more switches in accordance with one embodiment of the present invention;
FIGURE 4 is a perspective view of a wireless control device in accordance with one embodiment of the present invention;
FIGURE 5 is a exploded perspective view of the wireless control device shown in FIGURE 4;
FIGURE 6 is a side view of the wireless control device shown in FIGURE 4;
FIGURE 7 is a top view of the base plate of the wireless control device shown in FIGURE 4;
FIGURE 8 is a perspective view of the wireless control device shown in FIGURE 4 without a top cover;
FIGURE 9 is a top view of the wireless control device shown in FIGURE 4;
FIGURE 10 is a block diagram showing two types of devices in accordance with one embodiment of the present invention;
FIGURE 11 is a flow chart of a GPS location and/or time controlled process in accordance with one embodiment of the present invention;
FIGURE 12 is a diagram of a user interface screen with options to select the time, date or days of the week and select location or chose current location in case the user with the controlling device is at the location of the smart device(s) in accordance with one embodiment of the present invention;

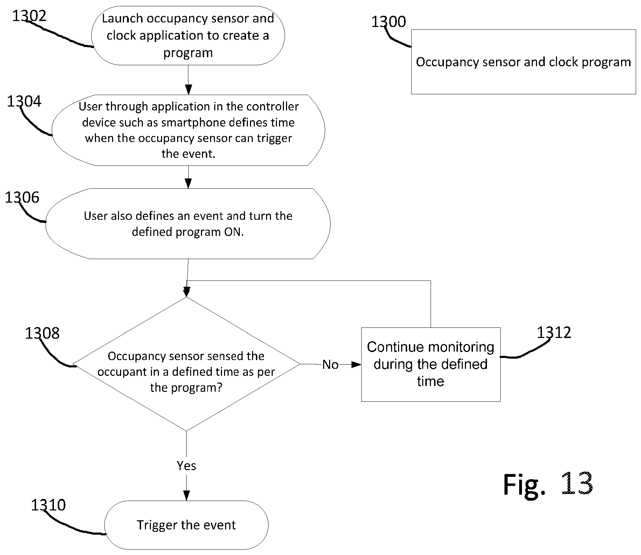

FIGURE 13 is a flow chart of a GPS location and/or time controlled process in accordance with one embodiment of the present invention;

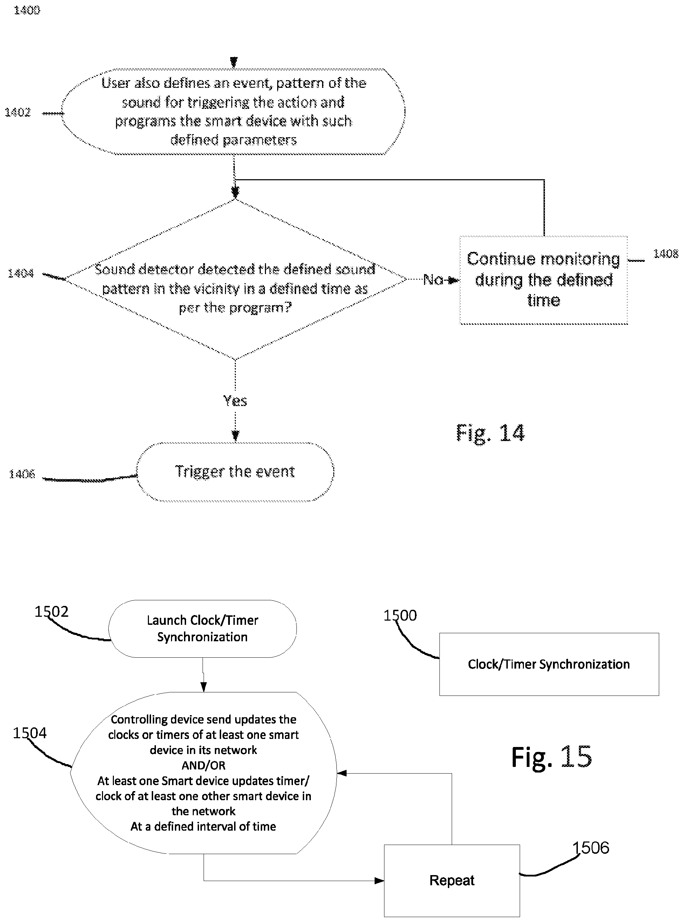

FIGURE 14 is a flow chart of an occupancy sensor and clock process in accordance with one embodiment of the present invention;
FIGURE 15 is a flow chart of a clock/timer synchronization process in accordance with one embodiment of the present invention;

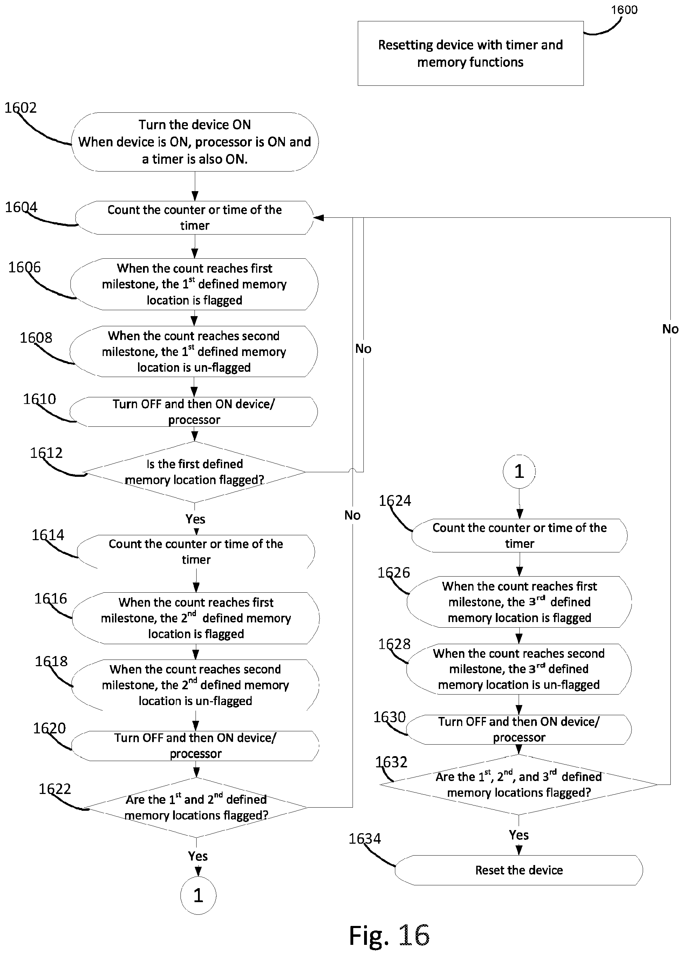

FIGURE 16 is a flow chart of a process to reset the hardware or programming using the processor timer in accordance with one embodiment of the present invention; and

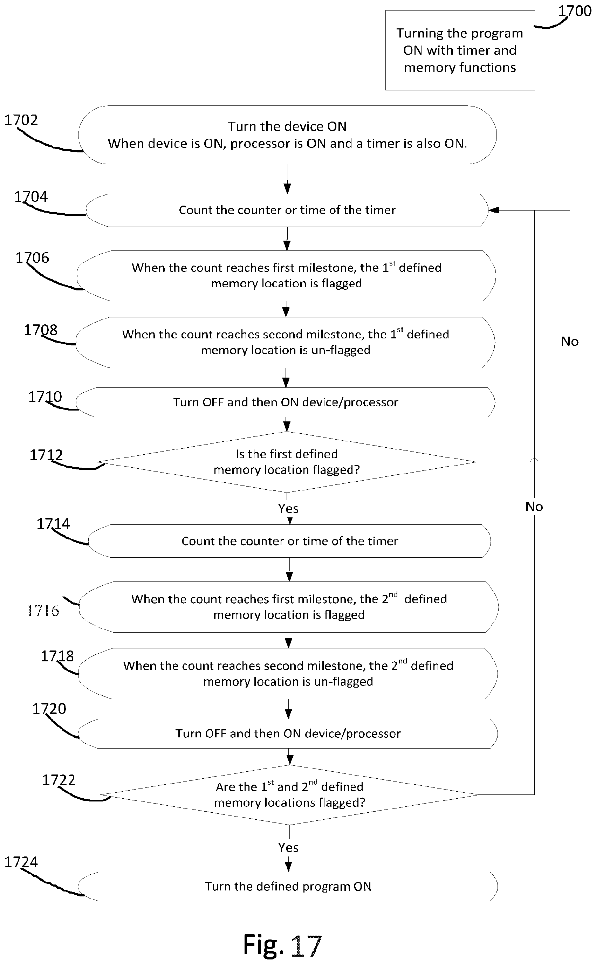

FIGURE 17 is a flow chart of a process to turn the program ON using the processor timer in accordance with one embodiment of the present invention.

### DETAILED DESCRIPTION OF THE INVENTION

While the making and using of various embodiments of the present invention are discussed in detail below, it should be appreciated that the present invention provides many applicable inventive concepts that can be embodied in a wide variety of specific contexts. The specific embodiments discussed herein are merely illustrative of specific ways to make and use the invention and do not delimit the scope of the invention.

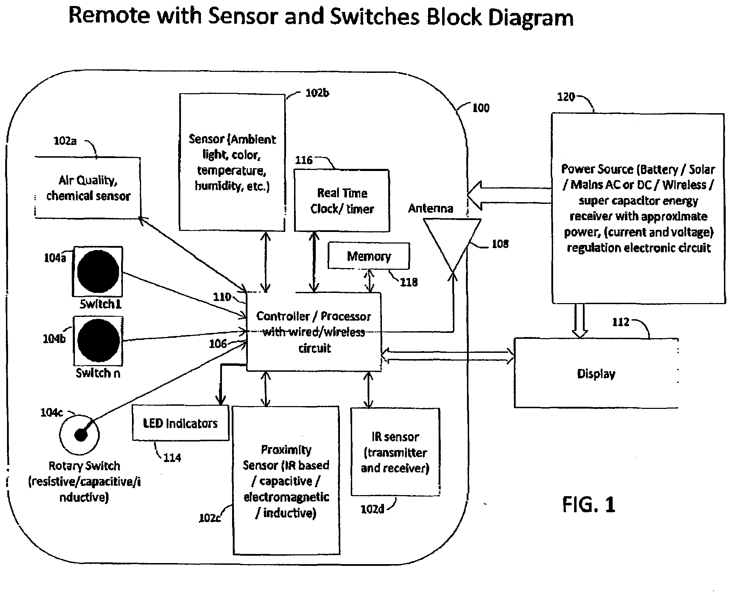

Now referring to FIGURE 1, a block diagram of a wireless control device 100 in accordance with one embodiment of the present invention is shown. Note that the wireless control device 100 may also be referred to as a switch device. The wireless control device 100 includes one or more sensors 102, one or more switches 104, a wireless transceiver circuit 106 with antenna 108, and a processor 110 communicably coupled to the one or more sensors 102, one or more switches 104, and the wireless transceiver circuit 106. The wireless control device 100 can be used for controlling wireless devices over a wireless protocol such as Bluetooth, Wi-Fi, etc. The controller or processor 110 processes the input data, such as from sensors 102, switches 104, and sends commands and data to output devices, such as display 112, wireless transceiver circuit 106, LED indicator(s) 114, etc. For example, the processor 110 receives data from the one or more sensors 102 and/or the one or more switches 104, determines a pre-defined action associated with the data that identifies one or more external devices and one or more tasks, and transmits one or more control signals via the wireless transceiver circuit 106 and the antenna 108 that instruct the identified external device(s) to perform the identified task(s). The display 112 can be used as an input and output device that gives readings, configuration, settings, etc. of the device and also interaction possibility to connect and communicate to the device, updating its software, changing the configuration and settings, etc. The display 112 can be an LCD display, LED display, or other desired display type, etc.

The one or more sensors 102 may include various sensors to measure air quality 102a, ambient light 102b, temperature 102b, humidity 102b, proximity 102c, motion 102d, sound/microphone, etc. The one or more sensors 102 obtain and provide environmental data as an input to the processor 110 for processing. A real time clock (RTC) 116 maintains the current date and time, and is useful to automate and program the device actions. LED indicators 104 indicate based on the input data, commands sent, actions taken by the processor 110, success or failure of the action, etc. Switches 104 may inlcude different types of switches. For example, push button switches 104a and 104b act as ON/OF triggers to the processor 110, and rotary switch 104c acts as analog input to the analog to digital converter communicably coupled to the processor 110. Memory 118 can be internal or external to the processor 110, volatile or non-volatile, and used to save configurations and other programmable data, such as user defined programs apart from manufacturer defined programs. Wireless circuit 106 can be part of the processor circuit 110 or a separate component communicably coupled with the processor 110. The wireless circuit 106 and antenna 108 are used to communicate to the external wireless devices. Power supply 120 can be a battery (internal or external, rechargeable or non-rechargeable), or an AC/DC or DC/DC converter that is taking power from external power source through a connector. Infra-Red (IR) LEDs and sensors 102d can be used for proximity detection or communication over IR.

Non-limiting examples of the applications, processes of configuring switches 104 for external device control, and the user interface for defining such configurations will be described. In addition, applications of other circuitry, such as the real time clock 116, memory 118, etc. will be described.

As previously stated, the wireless control device 100 can have one or multiple switches 104 (such as, but not limited to push pull switch, toggle switch, push button switch, rotary switch, resistive/capacitive switch, etc.). These switches 104 can be assigned an action for various permutations and combinations of turning ON/OFF or different positions. Actions can be turning ON light(s) at particular color/brightness level, connecting to phone or other wireless device, reading data from internal or external sensors, or sending commands to internal or external devices, etc.

An algorithm for configuring switches 104 using a software application may include the steps of:
1. Open the software application;
2. Connect to wireless control device 100 through the application software;
3. Define the switching action (e.g., press/click or turn ON/OFF one or multiple switches 104 once or multiple times in a defined time and defined pattern, etc.).
4. Assign an action to such defined switching action (e.g., turn the light ON to a particular color, etc.).

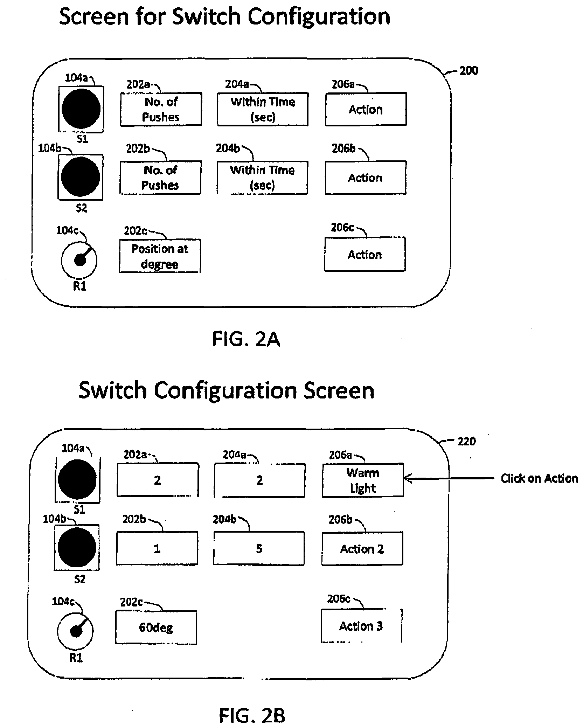

Referring now to FIGURE 2A, a diagram of a user interface screen 200 for configuring the one or more switches 104 in accordance with one embodiment of the present invention is shown. In this example, a graphical representation of each switch 104a (SI), 104b (S2), 104c (R1) along with one or more program parameters (e.g., number of pushes 202a within a specified period of time 204a for switch 104a; number of pushes 202b within a specified period of time 204b for switch 104b; position at degree 202c for switch 104c) and an action 206a, 206b, 206c for each switch 104a, 104b, 104c are displayed on the user interface screen 200. Note that more than two program parameters and more than one action can be provided. FIGURE 2B is a diagram of the user interface screen 220 showing an example configuration of the one or more switches 104 in which switch 104a is programmed to turn on warm light (action 206a set to "Warm Light") whenever switch 104a is pushed twice (program parameter 202a set to "2") within two seconds (program parameter 204a set to "2"). Switch 104b is programmed to perform action two (action 206b set to "Action 2") whenever switch 104b is pushed once (program parameter 202b set to "1") within five seconds (program parameter 204b set to "5"). Switch 104c is programmed to perform action three (action 206c set to "Action 3") whenever switch 104c is turned to a position of sixty degrees (program parameter 202c set to "60deg").

Proximity Sensor Applications in the Switch Device: The wireless control device 100 can have one or multiple proximity sensors 102c such as capacitive, electric field, magnetic field and IR based. Consider an IR based near field proximity sensor 102c that activates or changes the output signal whenever someone places his/her hand close to proximity sensor 102c. Based on this change in the signal provided as input to a processor 110, the processor 110 performs an action as defined internally, such as send a command to turn ON the light. When there are multiple such proximity sensors 102c on the device 100, and someone moves his/her hand over them in a particular direction (e.g., from down to up, etc.), each sensor produces variable outputs at different times based on position of the hand. These sensor outputs would form a pattern which can be monitored by the processor 110 and compared with defined and stored patterns. Once the compared patterns are matched, a particular action can be taken. This can be called as gesture recognition based on inputs from multiple IR sensors as well. For example, increasing the brightness when hand moves in down - up direction for a given number of times, or dimming the light when hand moves in up - down position for a given number of times in given time period.

Similarly, the wireless control device 100 can include an air quality or chemical sensor 102a. Air sensor can senses the purity of the air by sensing such things as oxygen levels, carbon dixoide or carbon monoxide levels, particulate levels, pollen levels, various particles, compositions, gases and chemicals in the air, etc.

Battery Energy Saving Mode by Time Multiplexing the Monitoring of the Sensors: The wireless control device 100 can have an energy saving mode that reduces power consumption and extends battery life by time multiplexing the monitoring of sensors 102. Consider a wireless control device 100 having various sensors such as proximity, ambient light and color sensors, air quality sensor, sound sensor (microphone), etc. The processor 110 within the wireless control device 100 will read data from sensors 102 and perform various actions based on the data. In addition, such a wireless control device 100 could work on battery, solar power, wireless energy receiver, AC or DC input. In many cases, power consumption for such a wireless control device 100 could be critical especially while running on battery or solar power. The power consumption becomes more critical when the number of sensors and electrical circuits are higher as each requires power to run. However, many times, the sensors 102 need not be active all the time or the processor 110 need not fetch data from sensors 102 all the time. The processor 110 can perform time division multiplexing or use pulsed sensing mechanism to activate the sensors 102 and fetch the data from them. Otherwise the sensor 102 can be in a sleep mode.

For example, a light sensor 102b, instead of providing ambient light data continuously, can provide the data for 10mS at an interval of 1 second, or some time interval and for amount of time that is enough to provide required accuracy of the input data to the processor 110. This will save overall power consumption of up to 10mS/1S x 100% = 99% from the ambient light sensor 102b. In other words, 99% of the time, the sensor 102b will be in standby mode or sleep mode consuming extremely low power. In addition, sensors such as proximity sensors 102c can be activated in a similar way, but the active time can be increased when there is change in the input above threshold level. Consider a proximity sensor 102c with a single proximity sensor. It can be activated to sense the input for a short duration in every defined time interval as explained above for light sensor. However, the time when it should be active can be increased when there is a change in the input above given threshold. For example, consider that to ensure the reading accuracy sensor needs to be active for more than lOOmS, however, to sense the input change it needs only 10mS. Therefore, the processor 110 can be programmed to activate the sensor for 10mS every IS interval and read the input, and if the input crosses the defined threshold the processor 110 activates the sensor for more than lOOmS and reads the input for that amount of time and acts accordingly. This will help save the power by keeping the sensor on standby mode or sleep mode as much as required.

An example of an algorithm to save power with time multiplexing is as follows:
1. Activate the sensor or a particular electronic circuit for limited time and read the data;
2. Put the sensor or that particular electronic circuit to standby or sleep mode for a defined time; and
3. Repeat steps 1 and 2.

An example of an algorithm to save power with time multiplexing and active time change based on the input is as follows:
1. Activate the sensor or a particular electronic circuit for limited time and read the data;
2. Put sensor or that particular electronic circuit to a standby mode or sleep mode for a defined period of time;
3. Repeat step 1 and 2, and go to step 4 if the reading from step 1 is beyond defined threshold level;
4. Keep the sensor active for longer defined time duration and read the data (this time duration can be changed dynamically based on sensor input); and
5. Go to step 1.

Real Time Clock Based Sensing: Most of the time, various sensors need not be active for longer duration. For example, the light sensor 102b could be defined to be active only from 6 pm to 7 am based on sunset and sunrise times. Similarly, proximity sensor 102c can be defined to be active on weekdays from 5 pm to 8 am on weekdays and all day during the weekend based on a presence of a person in the room where wireless control device 100 is installed. This allows conserving the power used by wireless control device 100, which is important when it is running on limited power sources such as batteries, super capacitors, etc. The duration of sensor activeness could also be reduced in defined time period by increasing the interval duration (time) when sensor should become active for limited time period. An application on a controlling wireless device such as smartphone that is able to communicate with the sensor switch can help define such times when sensors need to be active. For example, interval time of 1 second at every 30 seconds as provided in the above examples could be 4 seconds or higher from 8am to 6pm at every 30 seconds and 1 second from 6pm to 8am at every 30 seconds saving additional power requirement. Such longer interval durations could be given specific names such as semi-sleep mode or low power or power saving mode. Various such power modes could be already part of the wireless device and wireless control device 100 system.

An example of an algorithm for real time clock based sensing is as follows:
1. Open the device with an application for controlling/communicating with the wireless control device 100 (device with an app would be able to communicate with wireless control device 100 wirelessly or through other electrical connections);
2. Configure the wireless control device 100 to low power modes or sleep modes for specific days and times - processor 110 will check the real time clock/timer inputs and act as per the configuration; and
3. Auto activation based on input of the wireless control device 100 during real time clock/timer based sensing program:
   Auto Activation Based on Input of the Sensor During Real Time Clock/Timer Based Sensing Progran: In the above real time clock/timer based program, it may happen that there are exceptions, such as user is available during the defined sleep mode or low power mode and thus need to override the real time clock based program with the normal program. In such situations, additional algorithms can be implemented where once sensors in the wireless control device 100 senses the change in the input in its phase or user turns the sleep mode or power saving mode OFF through an application on a controlling device, the normal or other program takes the control of the system. An example of an algorithm is as follows:
   1. Monitor the sensor activity as defined in the defined mode such as sleep or power saving mode;
   2. If any change in the input from the sensor observed during such mode, turn the other program or mode such as normal or active mode ON; and
   3. Go back to sleep or power saving mode for the next defined iteration as per the real time clock/timer input.

Wireless Communication, such as Bluetooth, Based Activeation of the Sensors: A user can also activate or bring the wireless control device 100 in the active mode from sleep mode through his/her wireless controlling device. For example, when the user opens the app (application software) on the controlling device, it tries to connect to the wireless control device 100 by sending commands. In such cases, as soon as wireless control device 100 gets the commands, it becomes active from sleep or other modes. Once the controlling device app is turned OFF and user has no intent to communicate with the wireless control device 100, the wireless control device 100 can go in the sleep mode or other mode after defined period of time. An example of an algorithm is as follows:
1. User opens the application software (app) on the controlling device;
2. Application initiates the communication with wireless control device 100 (assume that the processor in the wireless control device 100 continuously monitors for other controlling or companion devices even when its sensors are in sleep or power saving mode); and
3. When wireless control device 100 doesn't detect the controlling or companion device anymore, it could go back to sleep or power saving mode as per the defined program.

Button Based Activation of Sensors: The wireless control device 100 can go into a complete sleep mode (i.e., no sensors active at all or particular sensors are not active at all). Those sensors can be activated only when a button switch such as push button is pressed on the wireless control device 100. When pushed, the processor 110 gets a signal from the button switch and it then activates required sensors for defined time period. After this time period, the sensors go back to other modes as per the program. An example of an algorithm is as follows:
1. User presses the button switch and that is sensed by the processor 110 (sensors can be active for a defined time period once turned ON by commands from the processor);
2. Processor then activates the sensor(s) for a defined time period; and
3. Sensor(s) then go back to other modes as per the program(s) after the defined time period.

Proximity Sensor or Light Sensor Based Activation of the Sensor: One sensor can be activated based on inputs from other sensor(s) through processor. For example, when user waves hand around proximity sensor 102c so that there is a change in the proximity sensors output that is measured by processor 110, the processor 110 can based on such input activate other sensors such as ambient light sensor 102b or additional IR proximity sensor used for recognizing gestures for defined time period.

Configuring Sensor Switch with Permutations and Combinations: The wireless control device 100 can be configured through a software on a computing device such as smartphone, laptop, etc. The configuration software has options to configure at least one switch or sensor input with respect to time, number of ON/OFF commands (push switch, toggle switch or wave hand across a proximity senor in particular direction at particular height, etc.) in a given time and interval of time for a specific trigger. The software can also configure the multiple switches in terms of a pattern when they are pressed with respect to each other in terms of time and no. of times, including they are pressed simultaneously for any time duration and at one or more interval of times to generate a trigger.

For example, configurations for various triggers could be defined as follows:
Turn ON/OFF one switch at a time;
Turn ON/OFF one switch every 1 second 4 times;
Keep hand on proximity sensor for a particular duration;
Wave hand on sensor in one direction n number of times;
Turn ON/OFF multiple switches simultaneously;
Turn ON/OFF multiple switches every 1 second 4 times;
Keep one or more switches ON/OFF for a duration of 5 seconds; or
Any possible permutations and combinations of above like configurations.

The controller or processor 110 monitors the inputs (ON/OFF conditions) from the switches 104 and determines the configuration as per the pattern. The processor 110 then generates a trigger with a specific command or data. The command can in turn be sent to another device such as light, fan, etc. for their control. Each configuration can be associated with different set of commands such as setting a light scene of multiple lighting devices, setting a AC temperature to a particular predefined value, turning the wireless plug ON or OFF, and many more.

Configure Based on Time with Real Time Clock: The configuration can also be associated with respect to a day and particular time in that day. For example, if the configuration is received by a processor at 7 am on weekday, the command sent by the processor 110 could be to turn lights ON to a cool white light. If the same configuration is received at 7 pm on weekend, the command sent could be to turn light ON to a warmer white light. The processor 110 is getting date and time update from the real time clock 116 and take actions based on the time when the configuration is received.

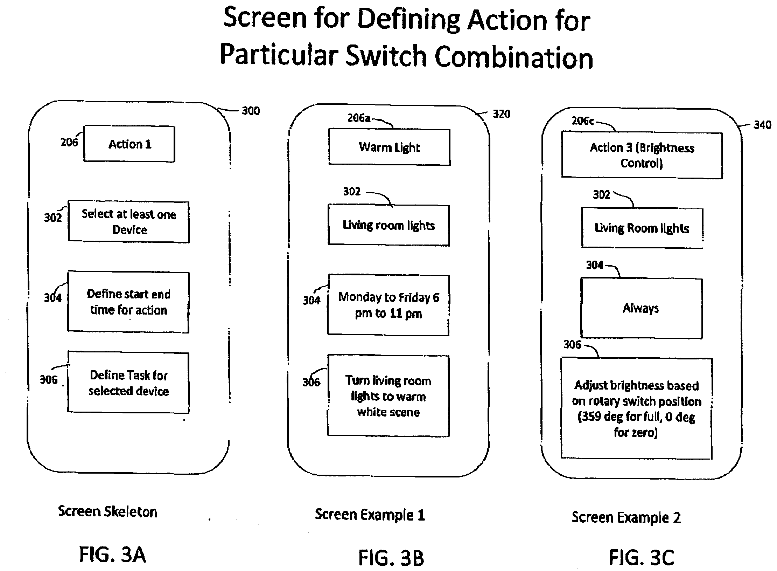

Now referring to FIGURE 3A, a diagram of a user interface screen 300 for defining an action for the one or more switches 104 in accordance with one embodiment of the present invention is shown. The process of configuring the switches 104 can be easier on the user interface of the input device, such as computer or smartphone. As previously described in reference to FIGURES 2A-2B, the application software will have various parameters such as switch input (ON/OFF), time interval, number of times a particular switch input is provided, duration when the switch input is provided, variations in the input from the proximity sensor, number of times a particular type of input is provided through a sensor, etc. These options will be available on the user screen. In addition, the options for triggers or commands to devices such as turn light ON to particular color at a particular time and for a particular duration, change the A/C temperature setting, or generate a particular scene will be provided. The user can create its own command based on the permutations and combinations possibilities of devices to be controlled. This command and the configuration can be assigned to each other. Once assigned, the user can save this into the sensor switch device's processor memory or external memory accessible to the processor. The processor then monitors the inputs from sensors and switches for a configuration to trigger a command created by the user also saved in the memory. A user interface is shown to define such actions with various switch/sensor combinations in FIGURES 3A-3C.

As shown in FIGURES 3A-3C, the user can create his/her own command or action 206 based on permutations and combinations possibilities of devices to be controlled. This command or action 206 and the configuration can be assigned to each other. Once assigned, the user can save this into the memory 118 of the wireless control device 100 or external memory accessible to the processor 110. The processor 110 then monitors the inputs from sensors 102 and switches 104 for a configuration to trigger a command created by the user also saved in the memory 118. Each command or action 206 can be defined by selecting one or more devices 302, defining a start/end time for the action 304 and defining a task for the selected device using the user interface screen 300. For example, FIGURE 3B illustrates a user interface screen 320 in which a "Warm Light" action 206a is defined by selecting the living room lights 302, having a start/end time of Monday to Friday 6 pm to 11 pm 304, and a task of turning the living room lights to a warm light scene 306. In another example, FIGURE 3C illustrates a user interface screen 340 in which an "Action 3 (Brightness Control)" action 206c is defined by selecting the living room lights 302, having a start/end time of always 304, and a task of adjsuting the brightness based on the rotary switch position (359 degress for full and 0 degrees for zero) 306. Programmable scenes and other lighting effects are described in U.S. Patent No. 9,113,528 and U.S. provisional patent application 62/189,637.

Configuring the Light Adjustment through a Light Sensor and Real Time Clock: A user can also create a rule with respect to the light sensor that measures ambient light intensity and/or ambient light color and real time clock. The user can create this rule in an application software with user interface on the computing device such as computer or smartphone. The interface will have options to create a trigger to change the light output from a lighting device in the vicinity or adjust the electrically controllable shade (such as on windows) based on the ambient light measured at particular time of the day. The user can select the number/amount in terms of lumens or other light measurement unit at which the trigger should get generated and the time interval for particular days using RTC when trigger should be delivered as a command to a lighting device or controllable shade device.

Updating the Time in the Connected Devices through a Sensor Switch; The sensor switch can have RTC which retains the real time and day information with the help of a power from the battery. This sensor switch can update the day/time info in real time of the other connected devices which don't have battery to retain the time information or synchronise their clocks. The sensor switch can monitor the day and time information of the devices directly or through a mesh network and update it in case of discrepancy.

The clock (Real Time Clock) could be a part of the smart devices as well as controlling devices. In addition, the various sensors such as GPS location, proximity, occupancy, sound (mic), etc. are also part of smart devices and controlling devices.

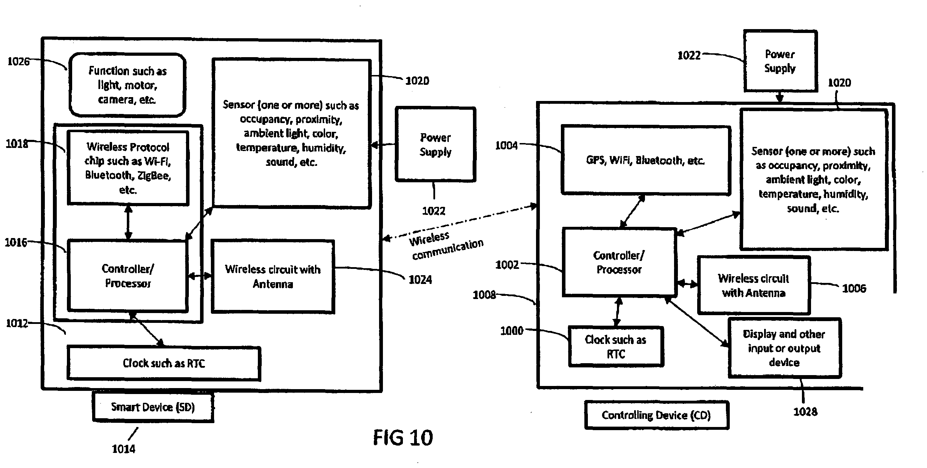

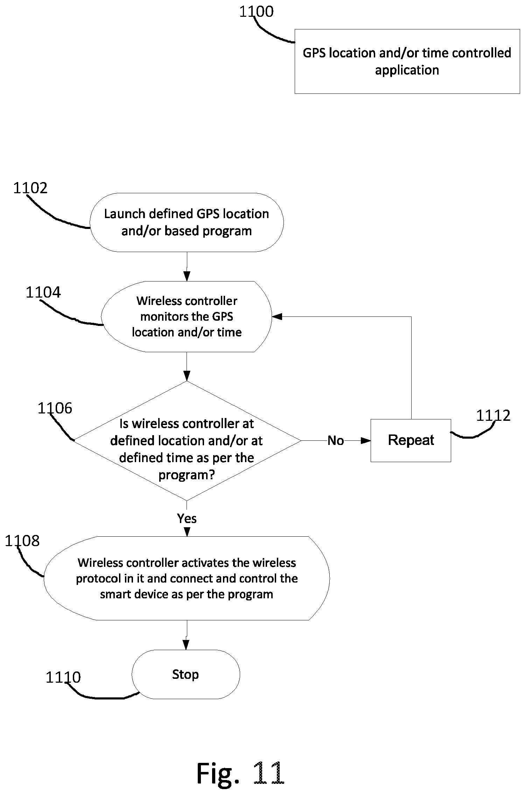

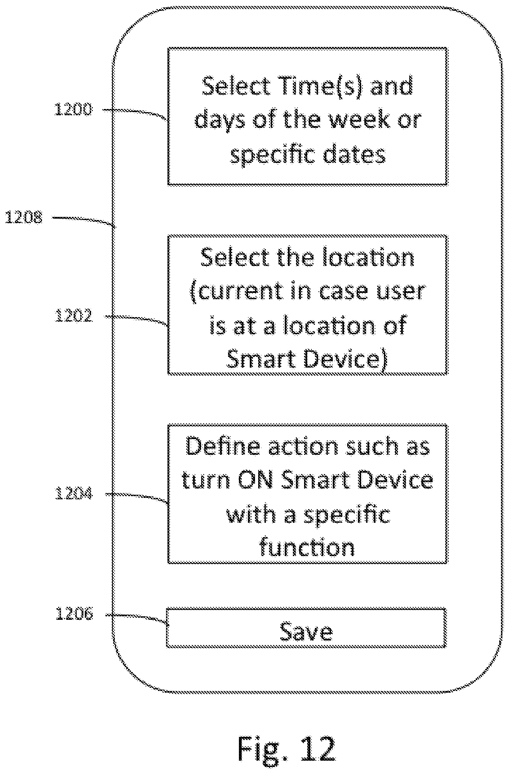

New controlling applications of the clock such as Real Time Clock in various smart devices such as smart lighting product, smart thermostat, etc. and the controlling devices such as smartphone, tablets, computers, remotes, etc. will be presented below with respect to FIGURES 10-12.

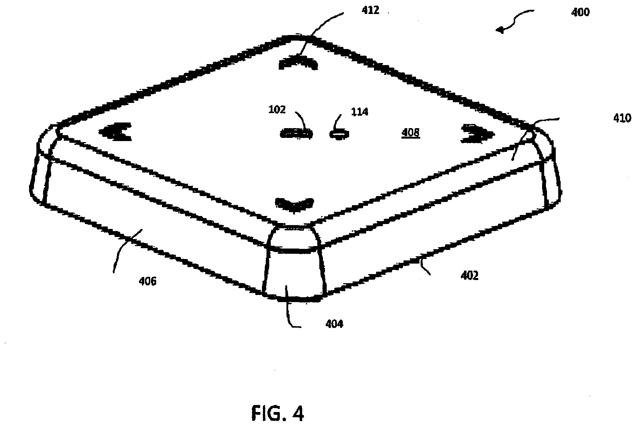

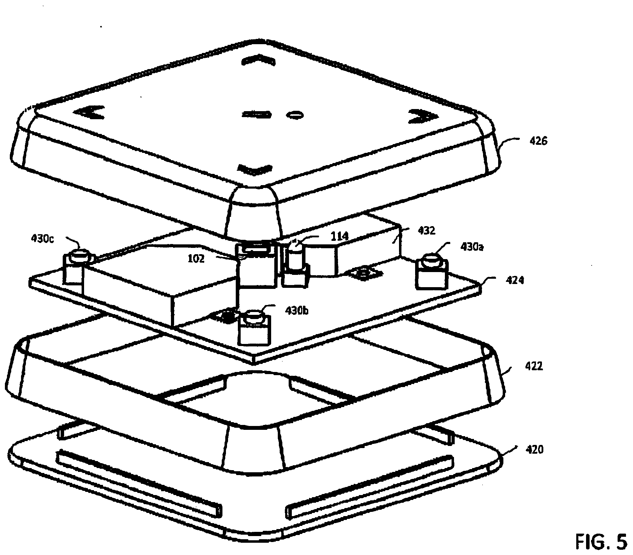

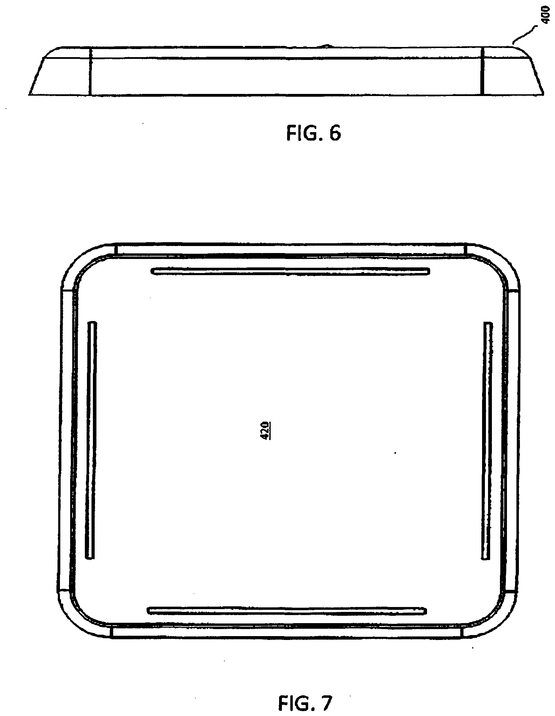

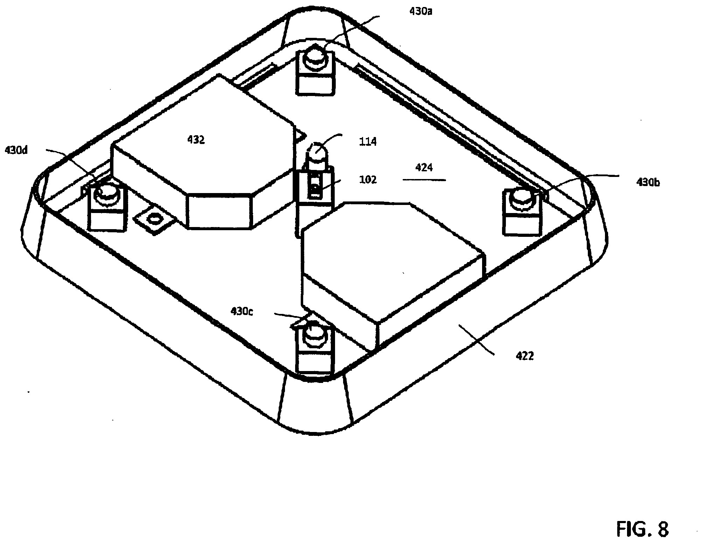

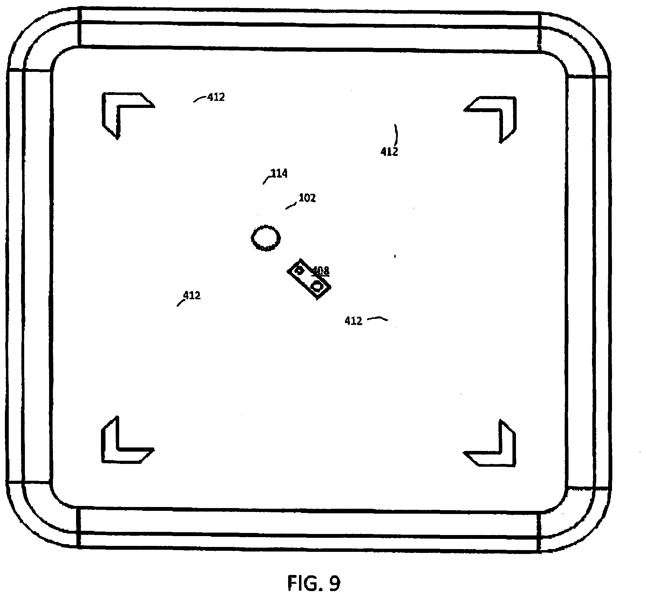

Now referring to FIGURES 4-9, various views of a wireless control device 400 in accordance with one embodiment of the present invention are shown. The control device 400 has a substantially square-shaped footprint 402 with rounded corners 404, sloped sides 406 and a top 408 with rounded edges 410. The top 408 may include one or more sensors 102, indicator light 114 and switch indicators 412. The control device 400 includes a base plate 420, an outer ring 422 attached to the base plate 420, and electronic board 424 disposed within the outer ring 422 and attached to the base plate 420, and a top cover 426 that mates with the outer ring 422. The electronic board 424 can include any or all of the components described in reference to FIGURE 1. For example, this embodiment includes four switches 430a, 430b, 430c, 430d mounted proximate to the corners 404 of memory function" 1700 begins in block 1702 when the device is turned ON (when the device is ON, the processor is ON and a timer is also ON). The counter or time of the timer is counted in block 1704. When the count reaches the first milestone, the first defined memory location is flagged in block 1706. When the count reaches the second milestone, the first defined memory location is unflagged in block 1708. The device/processor is turned OFF and then ON in block 1710. If the first defined memory location is not flagged, as determined in decision block 1712, the process loops back to block 1704 where the counter or time of the timer is counted. If, however, the first defined memory location is flagged, as determined in decision block 1712, the counter or time of the timer is counted in block 1714. When the count reaches the first milestone, the second defined memory location is flagged in block 1716. When the count reaches the second milestone, the second defined memory location is unflagged in block 1718. The device/processor is turned OFF and then ON in block 1720. If the first defined memory location is not flagged or the second defined memory location is not flagged, as determined in decision block 1722, the process loops back to block 1704 where the counter or time of the timer is counted. If, however, the first defined memory location is flagged and the second defined memory location is flagged, as determined in decision block 1722, the defined program is turned ON in block 1724.

It will be understood by those of skill in the art that information and signals may be represented using any of a variety of different technologies and techniques (e.g., data, instructions, commands, information, signals, bits, symbols, and chips may be represented by voltages, currents, electromagnetic waves, magnetic fields or particles, optical fields or particles, or any combination thereof). Likewise, the various illustrative logical blocks, modules, circuits, and algorithm steps described herein may be implemented as electronic hardware, computer software, or combinations of both, depending on the application and functionality. Moreover, the various logical blocks, modules, and circuits described herein may be implemented or performed with a general purpose processor (e.g., microprocessor, conventional processor, controller, microcontroller, state machine or combination of computing devices), a digital signal processor ("DSP"), an application specific integrated circuit ("ASIC"), a field programmable gate array ("FPGA") or other programmable logic device, discrete gate or transistor logic, discrete hardware components, or any combination thereof designed to perform the functions described herein. Similarly, steps of a method or process described herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art.

## Claims

1. A method for resetting a device (100) or turning a computer program ON in the device (100), wherein the device (100) comprises a counter or timer, a memory and a processor communicably coupled to the counter or timer and the memory; the method comprising:
selecting a first milestone for the counter or timer, a second milestone for the counter or timer, one or more defined memory locations or other operational parameters using a user interface communicably coupled to the device;
starting the counter or timer;
for each of the defined memory locations:
(a) determining a count of the counter or a time of the timer (1704);
(b) flagging the defined memory location when the count or time reaches the first milestone for the counter or timer (1606, 1706);
(c) un-flagging the first defined memory location when the count or time reaches the second milestone for the counter or timer (1608, 1708);
(d) turning the device OFF and then ON again (1610, 1710);
(e) repeating steps (a) through (d) when the defined memory location is not flagged or any previous defined memory locations are not flagged (1612, 1712);
repeating steps (a) through (e) until all the defined memory locations have been used and are flagged; and
resetting the device or turning the computer program ON in the device, wherein the computer program causes the processor to execute one or more commands when the computer program is turned ON (1634, 1724).

2. The method as recited in claim 1, further comprising, after step (c) and before step (d):
(i) repeating steps (a) through (c) when the first defined memory location is not flagged, wherein the defined memory location comprises a first defined memory location;
(ii) determining the count of the counter or the time of the timer;
(iii) flagging a second defined memory location when the count or time reaches the first milestone for the counter or timer (1616, 1716); and
(iv) un-flagging the second defined memory location when the count or time reaches the second milestone for the counter or timer (1618, 1718).

3. The method as recited in claim 1, further comprising repeating the determining, flagging, un-flagging, turning and repeating steps for one or more additional defined memory locations.

## Patentansprüche

1. Verfahren zum Zurücksetzen einer Vorrichtung (100) oder Einschalten eines Computerprogramms in der Vorrichtung (100), wobei die Vorrichtung (100) einen Zähler oder Timer, einen Speicher und einen Prozessor, der mit dem Zähler oder Timer und dem Speicher kommunikativ gekoppelt ist, umfasst; wobei das Verfahren Folgendes umfasst:
Auswählen eines ersten Meilensteins für den Zähler oder Timer, eines zweiten Meilensteins für den Zähler oder Timer, eines oder mehrerer definierter Speicherorte oder anderer Betriebsparameter unter Verwendung einer Benutzeroberfläche, die mit der Vorrichtung kommunikativ gekoppelt ist;
Starten des Zählers oder Timers;
für jeden der definierten Speicherorte:
(a) Bestimmen eines Zählwerts des Zählers oder einer Zeit des Timers (1704);
(b) Flagging des definierten Speicherorts, wenn der Zählwert oder die Zeit den ersten Meilenstein für den Zähler oder Timer erreicht (1606, 1706);
(c) Un-Flagging des ersten definierten Speicherorts, wenn der Zählwert oder die Zeit den zweiten Meilenstein für den Zähler oder Timer erreicht (1608, 1708);
(d) Aus- und Wiedereinschalten der Vorrichtung (1610, 1710);
(e) Wiederholen der Schritte (a) bis (d), wenn der definierte Speicherort nicht geflaggt ist oder etwaige vorherige definierte Speicherorte nicht geflaggt sind (1612, 1712);
Wiederholen der Schritte (a) bis (e), bis alle definierten Speicherorte verwendet worden und geflaggt sind; und
Zurücksetzen der Vorrichtung oder Einschalten des Computerprogramms in der Vorrichtung, wobei das Computerprogramm bewirkt, dass der Prozessor einen oder mehrere Befehle ausführt, wenn das Computerprogramm eingeschaltet wird (1634, 1724).

2. Verfahren nach Anspruch 1, das nach Schritt (c) und vor Schritt (d) ferner Folgendes umfasst:
(i) Wiederholen der Schritte (a) bis (c), wenn der erste definierte Speicherort nicht geflaggt ist, wobei der definierte Speicherort einen ersten definierten Speicherort umfasst;
(ii) Bestimmen des Zählwerts des Zählers oder der Zeit des Timers;
(iii)Flagging eines zweiten definierten Speicherorts, wenn der Zählwert oder die Zeit den ersten Meilenstein für den Zähler oder Timer erreicht (1616, 1716); und
(iv) Un-Flagging des zweiten definierten Speicherorts, wenn der Zählwert oder die Zeit den zweiten Meilenstein für den Zähler oder Timer erreicht (1618, 1718).

3. Verfahren nach Anspruch 1, ferner umfassend Wiederholen der Bestimmungs-, Flagging-, Un-Flagging-, Aus-/Einschalt- und Wiederholungsschritte für einen oder mehrere zusätzliche definierte Speicherorte.

## Revendications

1. Procédé de réinitialisation d'un dispositif (100) ou de mise en marche d'un programme informatique dans le dispositif (100), où le dispositif (100) comprend un compteur ou une minuterie, une mémoire et un processeur couplé de manière communicante au compteur ou à la minuterie et à la mémoire ;
le procédé comprenant les étapes suivantes :
sélectionner un premier repère pour le compteur ou la minuterie, un deuxième repère pour le compteur ou la minuterie, un ou plusieurs emplacements de mémoire définis ou d'autres paramètres opérationnels en utilisant une interface utilisateur couplée de manière communicante au dispositif ;
démarrer le compteur ou la minuterie ;
pour chacun des emplacements de mémoire définis :
(a) déterminer un comptage du compteur ou un temps de la minuterie (1704) ;
(b) marquer l'emplacement de mémoire défini lorsque le comptage ou le temps atteint le premier repère du compteur ou de la minuterie (1606, 1706) ;
(c) ôter le marquage du premier emplacement de mémoire défini lorsque le compteur ou le temps atteint le deuxième repère pour le compteur ou la minuterie (1608, 1708) ;
(d) éteindre le dispositif puis l'allumer à nouveau (1610, 1710) ;
(e) répéter les étapes (a) à (d) lorsque l'emplacement de mémoire défini n'est pas marqué ou que des emplacements de mémoire quelconque définis précédemment ne sont pas marqués (1612, 1712) ;
répéter les étapes (a) à (e) jusqu'à ce que tous les emplacements de mémoire définis aient été utilisés et soient marqués ; et
réinitialiser le dispositif ou mettre en marche le programme informatique dans le dispositif, où le programme informatique amène le processeur à exécuter une ou plusieurs commandes lorsque le programme informatique est mis en marche (1634, 1724).

2. Procédé tel qu'énoncé dans la revendication 1, comprenant en outre, après l'étape (c) et avant l'étape (d), les étapes suivantes :
(i) répéter les étapes (a) à (c) lorsque le premier emplacement de mémoire défini n'est pas marqué, où l'emplacement de mémoire défini comprend un premier emplacement de mémoire défini ;
(ii) déterminer le comptage du compteur ou le temps de la minuterie ;
(iii) marquer un deuxième emplacement de mémoire défini lorsque le comptage ou le temps atteint le premier repère pour le compteur ou la minuterie (1616, 1716) ; et
(iv) ôter le marquage du deuxième emplacement de mémoire défini lorsque le comptage ou le temps atteint le deuxième repère pour le compteur ou la minuterie (1618, 1718).

3. Procédé tel qu'énoncé dans la revendication 1, comprenant en outre de répéter les étapes de détermination, de marquage, d'annulation, de retrait du marquage, d'allumage/extinction et de répétition pour un ou plusieurs emplacements de mémoire définis supplémentaires.
